# FASCICULE DE BREVET EUROPEEN

(11) **EP 1 818 613 B1**
(45) Date de publication et mention de la délivrance du brevet: **10.10.2018**
(21) Numéro de dépôt: 07290121.8
(22) Date de dépôt: 30.01.2007
(51) Int. Cl.: F23R 3/06

(54) **Chambre de combustion d'une turbomachine**
Brennkammer eines Turbotriebwerks
Combustion chamber of a turbomachine

(30) Priorité: 08.02.2006 FR 0601097
(43) Date de publication de la demande: 15.08.2007
(73) Titulaire: Safran Aircraft Engines, 75015 Paris (FR)
(72) Inventeur: Bessagnet, Florian André François, 94260 Fresnes (FR); Commaret, Patrice André, 77950 Rubelles (FR); De Sousa, Mario César, 77240 Cesson (FR); Hernandez, Didier Hippolyte, 77720 Quiers (FR)
(74) Mandataire: Pichat, Thierry

(56) Documents cités:
- EP-A1- 0 552 477
- EP-A2- 1 329 669
- DE-A1- 2 932 318
- FR-A1- 2 144 731
- GB-A- 2 287 310
- GB-A- 2 306 594
- US-A- 3 019 605
- US-A1- 2002 017 101
- US-A1- 2002 184 893
- US-A1- 2003 213 250

## Description

La présente invention concerne une chambre annulaire de combustion d'une turbomachine, telle qu'un turboréacteur ou un turbopropulseur d'avion.

Une telle chambre de combustion comprend des parois de révolution coaxiales qui s'étendent l'une à l'intérieur de l'autre et qui sont reliées à leurs extrémités amont par une paroi annulaire de fond de chambre comportant des ouvertures d'alimentation en air et des moyens d'amenée de carburant.

Le document GB-A-2 287 310 décrit un écran annulaire de protection thermique rapporté sur la face aval d'une paroi de fond de chambre et comportant des orifices de montage des moyens d'amenée de carburant. Plusieurs fentes radiales sont formées sur le bord de chacun de ces orifices pour réduire les contraintes liées aux dilatations thermiques dans l'écran.

Les parois interne et externe de la chambre comportent des orifices d'entrée d'air primaire et d'air de dilution comprenant des bords en saillie à l'intérieur de la chambre pour améliorer la pénétration de l'air dans la chambre et pour guider cet air au coeur même du foyer de combustion de la chambre (voir par exemple le document US-A-3,019,605).

Le document US2002/017101 décrit une chambre de combustion annulaire dont les parois de révolution interne et externe comprennent des orifices d'admission d'air formés par emboutissage.

Ces orifices d'entrée d'air sont usuellement de forme circulaire et réalisés par emboutissage ce qui crée des zones de concentrations de contraintes importantes au niveau des bords des orifices.

En fonctionnement de la turbomachine, les parois interne et externe de la chambre de combustion se dilatent thermiquement et sont soumises à des vibrations importantes, ce qui engendre des contraintes élevées au niveau des bords des orifices, susceptibles d'entraîner l'apparition de fissures ou criques sur ces bords et donc de réduire la durée de vie de la chambre.

Les parois de la chambre peuvent comprendre également des multiperforations inclinées pour le passage d'air de refroidissement qui sont formées à distance des bords en saillie des orifices et qui ne permettent pas un refroidissement adéquat du voisinage immédiat de ces orifices. Dans ces zones, les températures atteintes génèrent des brûlures et la corrosion locale du métal, ce qui entraîne l'apparition de fissures.

L'invention a notamment pour but d'apporter une solution simple, efficace et économique à ces problèmes.

Elle propose à cet effet une chambre de combustion d'une turbomachine, telle qu'un turboréacteur ou un turbopropulseur d'avion, la chambre de combustion comprenant des parois de révolution coaxiales s'étendant l'une à l'intérieur de l'autre et reliées à leurs extrémités amont par une paroi annulaire de fond de chambre, les parois de révolution, interne et externe, comportant des orifices d'entrée d'air primaire et d'air de dilution formés par emboutissage et comprenant des bords en saillie à l'intérieur de la chambre de combustion, cette chambre de combustion étant caractérisée en ce que :
- elle comprend des moyens de réduction ou de relaxation des contraintes dans les bords ou au voisinage des bords d'au moins certains de ces orifices, lesdits moyens de réduction ou de relaxation de contraintes comprenant pour chaque orifice une, deux ou trois fentes formées dans le bord ou autour d'une partie du bord dudit orifice, chaque fente étant reliée à au moins une de ses extrémités à un orifice d'arrêt de propagation de fissures, et
- les fentes et les orifices d'arrêt sont orientés sensiblement parallèlement à des microperforations formées dans la chambre pour son refroidissement.

Les moyens de réduction ou de relaxation de contraintes selon l'invention évitent la formation de criques et de fissures au bord des orifices d'entrée d'air primaire et d'air de dilution, et augmentent la durée de vie de la chambre. Ces moyens sont situés dans des zones de bord des orifices qui sont les plus sollicitées en fonctionnement c'est-à-dire les zones où les multiperforations ne peuvent pas être formées et où des fissures ou criques sont susceptibles d'apparaître.

Dans un premier mode de réalisation de l'invention, les moyens de réduction ou de relaxation des contraintes comprennent des fentes qui s'étendent depuis les bords des orifices d'entrée d'air jusqu'à des orifices d'arrêt de propagation de fissures. Ces orifices d'arrêt sont circulaires et leur diamètre est supérieur à la largeur des fentes pour réduire et répartir les contraintes locales aux extrémités des fentes et empêcher la propagation des fissures ou des criques à ces extrémités.

Ces fentes forment des interruptions dans les zones soumises à des contraintes et confèrent aux bords des orifices une relative souplesse, ce qui permet à ces zones de se dilater et de se déformer librement les unes par rapport aux autres en fonctionnement de la turbomachine. Cela évite la formation et la propagation des criques et des fissures dans ces zones et augmente la durée de vie de la chambre.

Les fentes formées dans le bord d'un orifice d'entrée d'air sont au nombre d'une, deux ou trois par exemple, et la taille, la forme et l'orientation de chaque fente sont déterminées pour que le bord de cet orifice ait une souplesse suffisante tout en conservant sa fonction principale de guidage de l'air dans la chambre.

Les fentes formées dans le bord d'un orifice sont préférentiellement symétriques par rapport à un plan passant par l'axe de cet orifice et par l'axe de la chambre. Ces fentes peuvent être régulièrement réparties autour de l'axe de l'orifice et être rectilignes ou de forme incurvée.

Dans une variante de réalisation de l'invention, des fentes sont formées à distance des bords des orifices et autour d'une partie de ces bords et comprennent à chacune de leurs extrémités un orifice cylindrique dont le diamètre est supérieur à la largeur de cette fente pour empêcher la propagation de fissures à partir de la fente. Ces fentes confèrent à la paroi de la chambre entourant ces orifices une relative souplesse permettant une dilatation et une déformation libre en fonctionnement de la turbomachine.

Dans ce cas, une partie de la fente est préférentiellement formée par un arc de cercle centré sur l'axe de l'orifice. Les parties d'extrémité de cette fente sont avantageusement orientées vers l'extérieur par rapport à l'axe de l'orifice, c'est à dire dans des zones où les contraintes sont moins importantes. Ces fentes sont préférentiellement de forme ondulée et présentent une triple courbure, la courbure médiane s'étendant autour d'une partie de l'orifice.

Avec des fentes et des orifices d'arrêt de propagation de fissures de la chambre orientés parallèlement à des microperforations formées dans la paroi de la chambre pour son refroiissement, de l'air va pouvoir pénétrer dans la chambre à travers ces fentes et ces orifices d'arrêt et participer au refroidissement de la chambre. Les fentes et/ou les orifices d'arrêt sont par exemple formés par découpe laser.

Les orifices d'entrée d'air formés par emboutissage peuvent être sensiblement de forme ovale avec un grand axe situé dans un plan parallèle ou perpendiculaire à l'axe de la chambre, leurs grands côtés étant situés dans les zones les plus susceptibles de criques ou de fissures.

L'invention concerne également une turbomachine, telle qu'un turboréacteur ou un turbopropulseur d'avion, caractérisée en ce qu'elle comprend une chambre de combustion telle que décrite ci-dessus.

L'invention sera mieux comprise et d'autres caractéristiques, détails et avantages de la présente invention apparaîtront plus clairement à la lecture de la description suivante faite à titre d'exemple non limitatif en référence aux dessins annexés dans lesquels :
- la figure 1 est une demi-vue schématique en coupe axiale d'une chambre de combustion d'une turbomachine selon l'état de la technique ;
- la figure 2 est une vue schématique partielle en perspective des parois de la chambre décrite figure 1 ;
- la figure 3 est une vue schématique agrandie d'une partie de paroi de la chambre de combustion selon un mode de réalisation de l'invention ;
- les figures 4 à 6 sont des vues correspondant à la figure 3 et à plus grande échelle, et représentent des variantes de réalisation de l'invention ;
- les figures 7 et 8 sont des vues correspondant à la figure 3 et représentent des allongements d'orifices de la chambre de combustion.

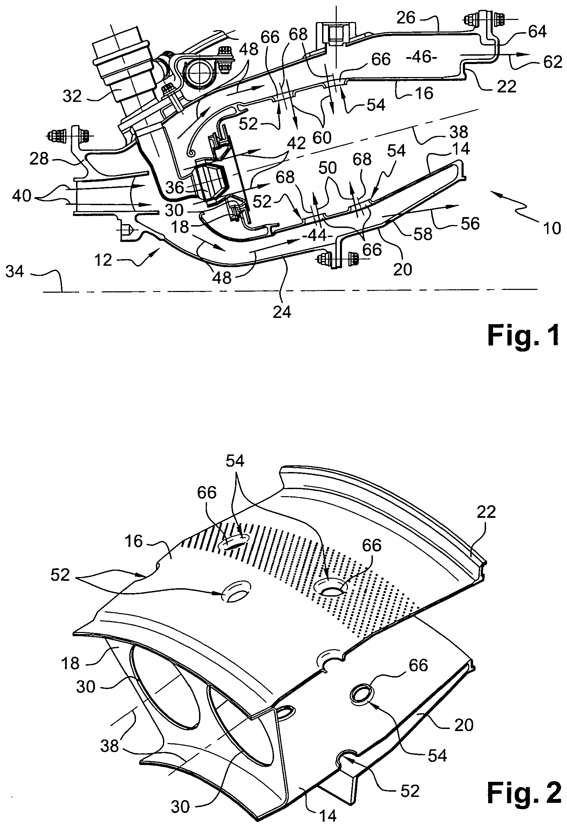

En figure 1, une chambre de combustion 10 de turbomachine est agencée en sortie d'un diffuseur 12, lui même situé en sortie d'un compresseur, non représenté, et comprend des parois de révolution interne 14 et externe 16 reliées en amont à une paroi annulaire 18 de fond de chambre et fixées en aval par des brides annulaires interne 20 et externe 22 respectivement sur un voile tronconique interne 24 du diffuseur, et sur une extrémité d'un carter externe 26 de la chambre, l'extrémité amont de ce carter 26 étant reliée à un voile tronconique externe 28 du diffuseur.

La paroi annulaire 18 de fond de chambre comporte des ouvertures 30 (figures 1 et 2) à travers lesquelles passe de l'air provenant du diffuseur 12 et du carburant amené par des injecteurs 32 fixés sur le carter externe 26 et régulièrement répartis sur une circonférence autour de l'axe longitudinal 34 de la chambre. Chaque injecteur 32 comprend une tête 36 d'injection de carburant montée dans une ouverture 30 de la paroi annulaire 18 et alignée avec l'axe 38 de cette ouverture 30.

Une partie du débit d'air fourni par le compresseur et sortant du diffuseur 12 (flèches 40) passe par les ouvertures 30 et alimente la chambre de combustion 10 (flèches 42), l'autre partie du débit d'air alimentant des canaux annulaires interne 44 et externe 46 de contournement de la chambre de combustion 10 (flèches 48).

Le canal interne 44 est formé entre le voile interne 24 du diffuseur 12 et la paroi interne 14 de la chambre, et l'air qui passe dans ce canal se partage en un débit 50 qui pénètre dans la chambre 10 par des orifices 52, 54 de la paroi interne 14 et en un débit 56 qui passe à travers des trous 58 de la bride interne 20 de la chambre pour aller refroidir des composants, non représentés, situés en aval de cette chambre.

Le canal externe 46 est formé entre le carter externe 26 et la paroi externe 16 de la chambre, et l'air qui passe dans ce canal se partage en un débit 60 qui pénètre dans la chambre 10 par des orifices 52, 54 de la paroi externe 16 et en un débit 62 qui passe à travers des trous 64 de la bride externe 22 pour aller refroidir des composants en aval.

Les orifices 52 appelés orifices d'entrée d'air primaire sont régulièrement répartis sur des circonférences des paroi interne 14 et externe 16, respectivement, centrées sur l'axe 34 de la chambre, et les orifices 54 appelés orifices d'entrée d'air de dilution sont régulièrement répartis sur des circonférences des paroi interne 14 et externe 16, respetivement, centrées sur l'axe 34 de la chambre et en aval des orifices 52.

Chaque orifice 52, 54 est de forme circulaire et est réalisé par emboutissage avec un bord tombé, c'est-à-dire un bord annulaire 66 qui s'étend en saillie à l'intérieur de la chambre 10. L'axe 68 de chaque orifice 52, 54 est perpendiculaire à la paroi 14, 16.

Du fait que les orifices 52, 54 sont réalisés par emboutissage, des contraintes résiduelles importantes sont créées au niveau des bords 66 des orifices qui s'ajoutent aux contraintes de fonctionnement et peuvent provoquer l'apparition de fissures ou criques sur ces bords.

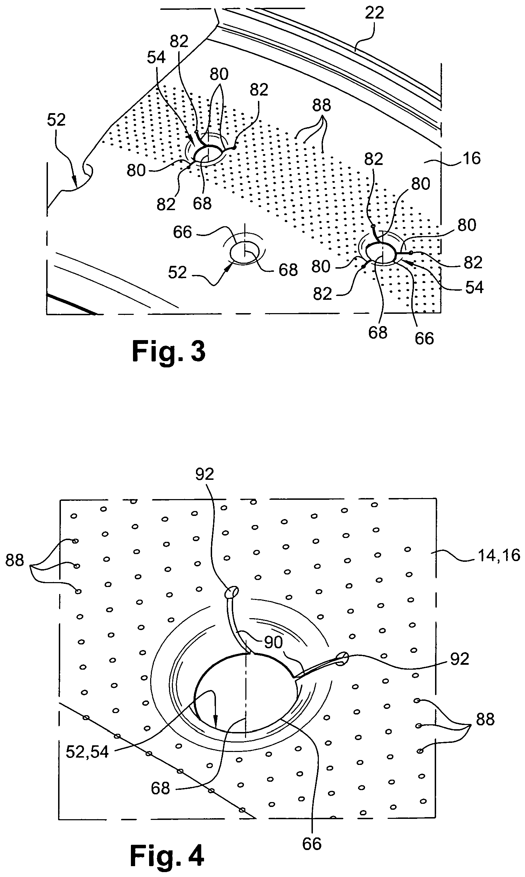

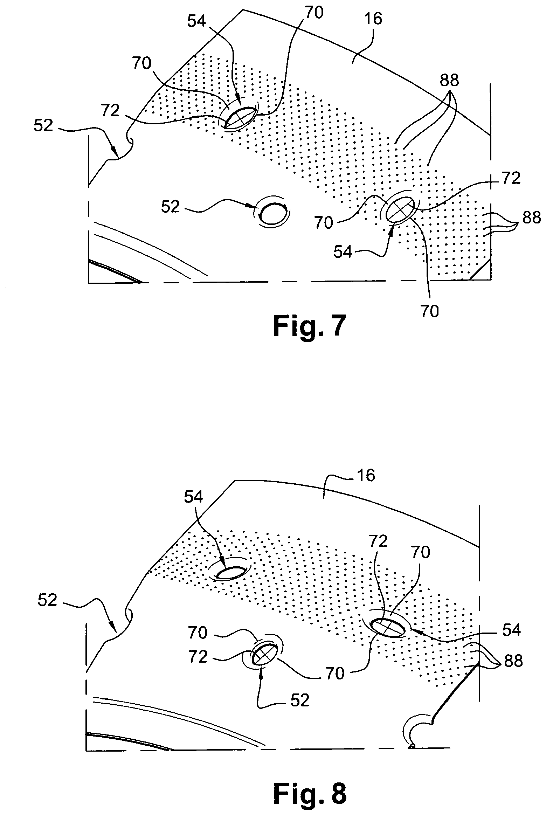

Selon l'invention, des moyens de relaxation ou de réduction de contraintes sont formés par des fentes 80, 90, 100, 110 formées dans les bords 66 ou autour des bords 66 des orifices (figures 3 à 6) et optionnellement par un allongement de ces orifices (figures 7 et 8).

Dans les modes de réalisation des figures 3 à 5, ces moyens comprennent des fentes 80, 90, 100 formées dans les bords 66 des orifices 52, 54 de forme circulaire et se terminant par un orifice cylindrique 82, 92, 102 ayant un diamètre supérieur à la largeur de la fente 80, 90, 100 et formant un orifice d'arrêt de propagation de criques et de fissures.

En figure 3, les orifices 54 d'entrée d'air de dilution comprennent chacun trois fentes rectilignes 80 s'étendant sensiblement radialement par rapport à l'orifice 54 et régulièrement réparties autour de l'axe 68 de cet orifice.

Une fente 80 est dirigée vers l'amont et s'étend parallèlement à l'axe de la chambre et les deux autres fentes 80 sont orientées vers l'aval. Le bord 66 de chaque orifice 54 est partagé en trois parties identiques qui peuvent se dilater et se déformer librement l'une par rapport à l'autre en fonctionnement de la turbomachine. Les orifices d'arrêt 82 formés aux extrémités des fentes 80 sont équidistants de l'axe 68.

Des fentes 80 peuvent également être formées dans les bords des orifices 52 d'entrée d'air primaire de la paroi externe 16 et dans les bords des orifices 52, 54 de la paroi interne 14.

En figure 4, le bord 66 de l'orifice 52, 54 comprend deux fentes sensiblement rectilignes 90 qui s'étendent radialement par rapport à l'axe 68 de l'orifice et qui sont symétriques par rapport à un plan passant par cet axe 68 et par l'axe de la chambre. Les orifices d'arrêt 92 formés aux extrémités des fentes 90 sont équidistants de l'axe 68 de l'orifice.

Dans l'exemple représenté, les fentes 90 s'étendent en aval de l'orifice et sont à 90° l'une de l'autre. Elles peuvent être formées dans les bords des orifices 52 d'entrée d'air primaire et/ou dans les bords des orifices 54 d'entrée d'air de dilution des parois 14, 16 de la chambre.

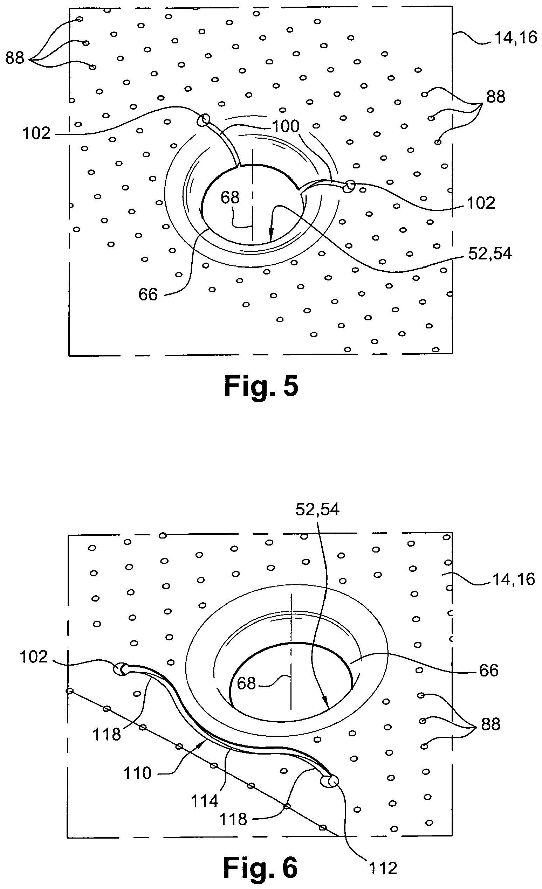

En figure 5, le bord 66 de l'orifice 52, 54 comprend deux fentes 100 qui diffèrent des fentes 90 de la figure 4 en ce qu'elles sont de forme incurvée.

Les fentes 100 sont incurvées sur 45° environ, et la partie de chaque fente 100 partant du bord de l'orifice s'étend sensiblement radialement par rapport à l'axe 68 de cet orifice, son autre extrémité étant orientée du côté opposé à l'autre fente 100.

Les fentes 100 s'étendent en aval de l'orifice et leurs extrémités reliées au bord de l'orifice sont à 90° environ l'une de l'autre. Elles peuvent être formées dans les bords des orifices 52 d'entrée d'air primaire et/ou dans les bords des orifices 54 d'entrée d'air de dilution des parois de la chambre.

Dans la variante de réalisation de la figure 6, les moyens de réduction ou de relaxation de contraintes comprennent des fentes 110 de forme ondulée formées autour d'une partie des bords 66 d'orifices 52, 54 de forme circulaire, et comportant à chacune de leurs extrémités un orifice d'arrêt 112 d'un diamètre supérieur à la largeur de la fente 110.

Dans l'exemple représenté, une fente 110 présentant une triple courbure est formée en amont du bord 66 d'un orifice 52, 54 et comprend une partie médiane 114 en arc de cercle centré sur l'axe 68 de l'orifice, les extrémités 118 de la fente 110 s'étendant sensiblement radialement vers l'extérieur par rapport à l'axe 68 de l'orifice.

La partie de la paroi de la chambre située en amont du bord 66 de l'orifice acquiert ainsi une relative souplesse qui lui permet de mieux se dilater et se déformer en fonctionnement.

Les parois externes 14, 16 de la chambre comprennent des microperforations 88 pour le passage d'air de refroidissement, ces microperforations étant inclinées, par exemple de 60° environ, par rapport à une normale à la surface externe de la paroi correspondante (figures 3 à 6).

Les fentes 80, 90, 100, 110 et les orifices d'arrêt 82, 92, 102, 112 peuvent être alignés avec les microperforations 88 et sont situés à une distance suffisante de ces microperforations 88 pour ne pas fragiliser les parties des parois de la chambre 10 situées à proximité des fentes et des orifices d'arrêt. Les fentes et les orifices d'arrêt peuvent ainsi servir au refroidissement de la chambre par circulation d'air à travers ces orifices.

Dans un mode de réalisation, les fentes 80, 90, 100, 110 ont une largeur inférieure à 1mm environ, et par exemple égale à 0,5mm, et les orifices 82, 92, 102, 112 ont alors un diamètre compris entre 1 et 2mm environ.

En figures 7 et 8, les orifices 52, 54 de la chambre sont de forme ovale ou elliptique, et les moyens de réduction ou de relaxation de contraintes sont formés par les grands côtés 70 des bords de ces orifices, situés de part et d'autre du grand axe 72 de l'ovale. Ces côtés 70, qui ont un grand rayon de courbure, permettent de mieux répartir et de réduire les contraintes dans les bords des orifices.

En figure 7, les orifices 52 d'entrée d'air primaire sont circulaires et les orifices 54 d'entrée d'air de dilution sont de forme ovale ou elliptique, avec un grand axe 72 orienté parallèlement à l'axe de la chambre de façon à ce que les grands côtés 70 des bords des orifices situées de part et d'autre du grand axe empêchent la formation de criques ou fissures dans une direction transversale par rapport à l'axe de la chambre.

En figure 8, les orifices 52 d'entrée d'air primaire sont identiques aux orifices 54 de la figure 7, et les orifices 54 d'entrée d'air de dilution sont de forme ovale ou elliptique, leur grand axe 72 étant orienté transversalement par rapport à l'axe de la chambre, et les grands cotés 70 des bords des orifices empêchent la formation de fissures dans une direction parallèle à l'axe de la chambre.

Bien entendu, l'invention n'est pas limitée aux modes de réalisation qui ont été décrits dans ce qui précède et représentés dans les dessins annexés. Par exemple, les orifices 52, 54 de la chambre pourraient être de forme ovale et comprendre également des fentes 80, 90, 100, 110 formées dans leurs bords ou au voisinage de leurs bords.

## Revendications

1. Chambre de combustion d'une turbomachine, telle qu'un turboréacteur ou un turbopropulseur d'avion, comprenant :
- des parois de révolution (14, 16) coaxiales s'étendant l'une à l'intérieur de l'autre et reliées à leurs extrémités amont par une paroi annulaire (18) de fond de chambre, les parois de révolution, interne (14) et externe (16), comportant des orifices (52, 54) d'entrée d'air primaire et d'air de dilution formés par emboutissage et comprenant des bords (66) en saillie à l'intérieur de la chambre de combustion (10), cette chambre de combustion étant **caractérisée en ce que** :
- elle comprend des moyens de réduction ou de relaxation des contraintes dans les bords (66) ou au voisinage des bords d'au moins certains de ces orifices, lesdits moyens de réduction ou de relaxation de contraintes comprenant pour chaque orifice une, deux ou trois fentes (80, 90, 100, 110) formées dans le bord (66) ou autour d'une partie du bord dudit orifice (52, 54), chaque fente étant reliée à au moins une de ses extrémités à un orifice (82, 92, 102, 112) d'arrêt de propagation de fissures, et
- les fentes (80, 90, 100, 110) et les orifices d'arrêt (82, 92, 102, 112) sont orientés sensiblement parallèlement à des microperforations (88) formées dans la chambre pour son refroidissement.

2. Chambre selon la revendication 1, **caractérisée en ce que** les fentes (80, 90, 100) s'étendent depuis les bords (66) des orifices jusqu'à des orifices d'arrêt de propagation de fissures.

3. Chambre selon la revendication 2, **caractérisée en ce que** les fentes (80, 90, 100) formées dans le bord d'un orifice sont symétriques par rapport à un plan passant par l'axe (68) de cet orifice et par l'axe (34) de la chambre.

4. Chambre selon la revendication 2 ou 3, **caractérisée en ce que** les fentes (80) formées dans le bord (66) d'un orifice sont régulièrement réparties autour de l'axe (68) de cet orifice.

5. Chambre selon l'une des revendications 2 à 4, **caractérisée en ce que** les fentes (80, 90, 100) sont rectilignes ou de forme incurvée.

6. Chambre selon la revendication 1, **caractérisée en ce que** les fentes (110) sont formées autour d'une partie des bords des orifices (52, 54) et comprennent à chacune de leurs extrémités un orifice (112) d'arrêt de propagation de fissures.

7. Chambre selon la revendication 6, **caractérisée en ce qu'**une partie de chaque fente (110) est de forme ondulée et présente une triple courbure.

8. Chambre selon la revendication 6 ou 7, **caractérisée en ce qu'**une partie de chaque fente (110) est formée par un arc de cercle centré sur l'axe (68) d'un orifice.

9. Chambre selon la revendication 8, **caractérisée en ce que** les parties d'extrémité de la fente (110) formée autour du bord (66) d'un orifice sont orientées vers l'extérieur par rapport à l'axe (68) de cet orifice.

10. Chambre selon l'une des revendications précédentes, **caractérisée en ce que** certains au moins des orifices (52, 54 ; 82, 92, 102, 112) et des fentes (80, 90, 100, 110) sont environnés de dites micro-perforations (88) qui sont formées à travers lesdites parois de révolution (14,16 ;14-16) pour le passage d'air de refroidissement vers l'intérieur de la chambre de combustion.

11. Chambre selon l'une des revendications précédentes, **caractérisée en ce que** les orifices d'arrêt (82, 92, 102, 112) ont un diamètre compris entre 1 et 2mm environ.

12. Chambre selon l'une des revendications précédentes, **caractérisée en ce que** les fentes (80, 90, 100, 110) ont une largeur inférieure à 1 mm environ, et par exemple de 0,5mm.

13. Chambre selon l'une des revendications précédentes, **caractérisée en ce que** les fentes et/ou les orifices d'arrêt sont formés par découpe laser.

14. Chambre selon l'une des revendications précédentes, **caractérisée en ce qu'**au moins une partie des orifices d'entrée d'air (52, 54) sont de forme ovale avec un grand axe (72) situé dans un plan parallèle ou perpendiculaire à l'axe (34) de la chambre.

15. Chambre selon la revendication 13, **caractérisée en ce que** les grands côtés des orifices (52, 54) sont situés dans les zones les plus susceptibles de criques ou de fissures.

16. Turbomachine, telle qu'un turboréacteur ou un turbopropulseur d'avion, **caractérisée en ce qu'**elle comprend une chambre de combustion (10) selon l'une des revendications précédentes.

## Patentansprüche

1. Brennkammer eines Turbotriebwerks, wie etwa eines Turbostrahltriebwerks oder Turboprop-Triebwerks für Flugzeuge, enthaltend koaxiale Rotationswände (14, 16), die sich ineinander erstrecken und an ihren stromaufwärtigen Enden durch eine ringförmige Kammerbodenwand (18) verbunden sind, wobei die Rotationswände, nämlich eine innere (14) und eine äußere (16), Einlassöffnungen (52, 54) für Primärluft und für Verdünnungsluft aufweisen, die durch Stanzen ausgebildet sind und Kanten (66) enthalten, die in die Brennkammer (10) vorspringen, wobei die Brennkammer **dadurch gekennzeichnet ist, dass** sie enthält :
- Mittel zum Verringern oder Entspannen von Spannungen in den Kanten (66) oder in der Nähe der Kanten von zumindest einigen dieser Öffnungen, wobei die Mittel zum Verringern oder Entspannen von Spannungen für jede Öffnung einen, zwei oder drei in der Kante (66) oder um einen Teil der Kante der Öffnung (52, 54) ausgebildete Schlitze (80, 90, 100, 110) aufweisen, wobei jeder Schlitz an zumindest einem seiner Enden mit einer Öffnung (82, 92, 102, 112) zum Stoppen von Rissausbreitung verbunden ist,
- die Schlitze (80, 90, 100, 110) und die Stoppöffnungen (82, 91, 102, 112) im Wesentlichen parallel zu Mikroperforationen (88) ausgerichtet sind, die in der Kammer zu deren Kühlung ausgebildet sind.

2. Kammer nach Anspruch 1, **dadurch gekennzeichnet, dass** die Schlitze (80, 90, 100) sich von den Kanten (66) der Öffnungen bis zu den Stoppöffnungen zum Stoppen von Rissausbreitung erstrecken.

3. Kammer nach Anspruch 2, **dadurch gekennzeichnet, dass** die Schlitze (80, 90, 100), die in der Kante einer Öffnung ausgebildet sind, symmetrisch in Bezug auf eine Ebene sind, die durch die Achse (68) dieser Öffnung und durch die Achse (34) der Kammer verläuft.

4. Kammer nach Anspruch 2 oder 3, **dadurch gekennzeichnet, dass** die Schlitze (80), die in der Kante (66) einer Öffnung ausgebildet sind, gleichmäßig um die Achse (68) dieser Öffnung verteilt sind.

5. Kammer nach einem der Ansprüche 2 bis 4, **dadurch gekennzeichnet, dass** die Schlitze (80, 90, 100) geradlinig oder gekrümmt verlaufen.

6. Kammer nach Anspruch 1, **dadurch gekennzeichnet, dass** die Schlitze (110) um einen Teil der Kanten der Öffnungen (52, 54) ausgebildet sind und an jedem ihren Enden eine Stoppöffnung (112) zum Stoppen von Rissausbreitung aufweisen.

7. Kammer nach Anspruch 6, **dadurch gekennzeichnet, dass** ein Teil eines jeden Schlitzes (110) wellenförmig ist und eine dreifache Krümmung aufweist.

8. Kammer nach Anspruch 6 oder 7, **dadurch gekennzeichnet, dass** ein Teil eines jeden Schlitzes (110) von einem Kreisbogen gebildet wird, der auf die Achse (68) einer Öffnung zentriert ist.

9. Kammer nach Anspruch 8, **dadurch gekennzeichnet, dass** die Endabschnitte des Schlitzes (110), der um die Kante (66) einer Öffnung herum ausgebildet ist, bezüglich der Achse (68) dieser Öffnung nach außen gerichtet sind.

10. Kammer nach einem der vorangehenden Ansprüche, **dadurch gekennzeichnet, dass** zumindest bestimmte der Öffnungen (52, 54; 82, 92, 102, 112) und der Schlitze (80, 90, 100, 110) von den Mikroperforationen (88) umgeben sind, die durch die Rotationswände (14, 16; 14 - 16) zum Durchtritt von Kühlluft in das Innere der Brennkammer ausgebildet sind.

11. Kammer nach einem der vorangehenden Ansprüche, **dadurch gekennzeichnet, dass** die Stoppöffnungen (82, 92, 102, 112) einen Durchmesser zwischen etwa 1 und 2 mm haben.

12. Kammer nach einem der vorangehenden Ansprüche, **dadurch gekennzeichnet, dass** die Schlitze (80, 90, 100, 110) eine Breite von unter etwa 1 mm, beispielweise 0,5 mm, haben.

13. Kammer nach einem der vorangehenden Ansprüche, **dadurch gekennzeichnet, dass** die Schlitze und/oder Stoppöffnungen durch Laserschneiden ausgebildet sind.

14. Kammer nach einem der vorangehenden Ansprüche, **dadurch gekennzeichnet, dass** zumindest ein Teil der Lufteinlassöffnungen (52, 54) eine ovale Form mit einer Hauptachse (72) haben, die in einer Ebene parallel oder senkrecht zur Achse (34) der Kammer liegt.

15. Kammer nach Anspruch 13, **dadurch gekennzeichnet, dass** die Breitseiten der Öffnungen (52, 54) in den Bereichen liegen, die an anfälligsten für Spalten und Risse sind.

16. Turbotriebwerk, wie etwa Turbostrahltriebwerk oder Turboprop-Triebwerk für Flugzeuge, **dadurch gekennzeichnet, dass** es eine Brennkammer (10) nach einem der vorangehenden Ansprüche enthält.

## Claims

1. A combustion chamber for a turbomachine such as an aircraft turbojet or turbofan, the chamber comprising:
- coaxial revolution walls (14,16) extending one inside the other and connected together at their upstream ends by an annular (18) chamber end wall, the inner revolution (14) and outer revolution (16) walls including each primary air inlet orifices (52, 54) and dilution air inlet orifices formed by die stamping and having edges (66) projecting into the inside of the combustion chamber (10), said combustion chamber being **characterized in that**:
- it includes stress relaxation or reduction means in the edges (66) or in the vicinity of the edges of at least some of said orifices, said stress relaxation or reduction means comprising, for each orifice, one, two, or three slots (80, 90, 100, 110) formed in the edge or around a portion of the edge (66) of said orifice (52, 54), each slot being connected at at least one of its ends to a crack propagation stop orifice (82, 92, 102, 112), and
- the slots (80, 90, 100, 110) and the stop orifices (82, 92, 102, 112) are oriented substantially parallel to microperforation (88) formed in the chamber for its cooling.

2. A chamber according to claim 1, **characterized in that** the slots (80, 90, 100) extend from the edges (66) of the orifices to crack propagation stop orifices.

3. A chamber according to claim 2, **characterized in that** the slots (80, 90, 100) formed in the edge of an orifice are symmetrical about a plane containing the axis (68) of said orifice and the axis (34) of the chamber.

4. A chamber according to claims 2 or 3, **characterized in that** the slots (80) formed in the edge (66) of an orifice are regularly distributed around the axis (68) of said orifice.

5. A chamber according to claims 2 or 4, **characterized in that** the slots (80, 90, 100) are rectilinear or curved in shape.

6. A chamber according to claim 1, **characterized in that** the slots (110) are formed around a portion of the edges of the orifices (52, 54) and have a crack propagation stop orifice (112) at each end.

7. A chamber according to claim 6, **characterized in that** a portion of each slot (110) is of wave form and presents triple curvature.

8. A chamber according to claims 6 or 7, **characterized in that** a portion of each slot (110) is formed by a circular arc centered on the axis (68) of an orifice.

9. A chamber according to claim 8, **characterized in that** the end portions of the slot (110) formed around the edge (66) of an orifice are directed outwards away from the axis (68) of said orifice.

10. A chamber according to any of the preceding claims, **characterized in that** at least some of the orifices (52, 54; 82, 92, 102, 112) and the slots (80, 90, 100, 110) are surrounded by said microperforation (88) which are formed through said revolution walls (14, 16; 14-16) for the flow of cooling air inwards the combustion chamber.

11. A chamber according to any of the preceding claims, **characterized in that** the stop orifices (82, 92, 102, 112) have a diameter lying in the range about 1 mm to about 2 mm.

12. A chamber according to any of the preceding claims, **characterized in that** the slots (80, 90, 100, 110) have width less than about 1 mm, and for example of 0,5 mm.

13. A chamber according to any of the preceding claims, **characterized in that** the slots and/or the stop orifices are formed by laser cutting.

14. A chamber according to any of the preceding claims, **characterized in that** at least some of the air inlet orifices (52, 54) are oval in shape with a long axis (72) situated in a plane parallel or perpendicular to the axis (34) of the chamber.

15. A chamber according to claim 13, **characterized in that** the long sides of the orifices (52, 54) are situated in the zones most subject to cracking.

16. A turbomachine, such as an aircraft turbojet or turboprop, **characterized in that** the turbomachine includes a combustion (10) chamber according to any of the preceding claims.
